# EUROPÄISCHE PATENTANMELDUNG

(11) **EP 0 547 546 A1**
(43) Veröffentlichungstag der Anmeldung: **23.06.1993**
(21) Anmeldenummer: 92121257.7
(22) Anmeldetag: 14.12.1992
(51) Int. Cl.: A01N 25/32

(54) **Kombination aus ALS-Hemmstoffen, Insektiziden und Safenern, Verfahren zu deren Herstellung und deren Verwendung als pflanzenschützende Mittel**

(30) Priorität: 14.12.1991 DE 4141247
(71) Anmelder: Hoechst Schering AgrEvo GmbH, D-13342 Berlin (DE)
(72) Erfinder: Bieringer, Hermann, Dr., W-6239 Eppstein/Ts. (DE); Hacker, Erwin, Dr., W-6203 Hochheim am Main (DE); Hess, Martin, Dr., W-6500 Mainz (DE)
(74) Vertreter: Fuchs, Luderschmidt & Partner Patentanwälte

(57) **Zusammenfassung**

Die Erfindung betrifft Mischungen bzw. Anwendungskombinationen, welche ALS-Hemmstoff-Herbizide und andere Pflanzenschutzmittel wie Insektizide oder Herbizide mit andersartigen Wirkungsmechanismen enthalten, unabhängig davon ob diese Präparate gemeinsam oder nacheinander ausgebracht werden, insbesondere ein oder mehrere Herbizide aus der Gruppe der Sulfonylharnstoffe, Imidazolinone und Pyrimidin- oder Triazinderivate und weitere Mittel wie Insektizide und Herbizide und eine oder mehrere Verbindungen der Formeln B1 und B2, 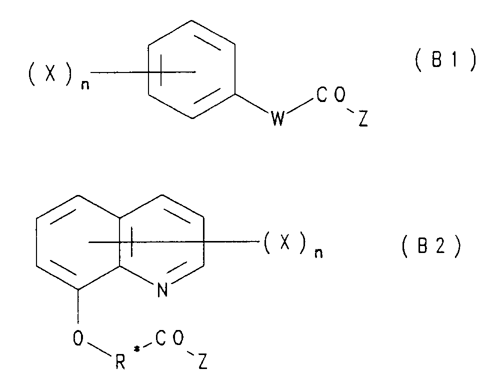
worin die Reste wie in der Beschreibung definiert sind.

Es wurde gefunden, daß sich Schädigungen an den Kulturpflanzen verringern oder ganz verhindert werden lassen, wenn diese Mischungen oder Anwendungskombinationen appliziert werden.

## Beschreibung

Die Erfindung betrifft das technische Gebiet der Pflanzenschutzmittel, insbesondere Kombinationen von Herbiziden vom Typ der ALS-Hemmstoffe mit Insektiziden oder anderen blattwirksamen Herbiziden.

In der deutschen Patentanmeldung P 40 41 120.6 ist vorgeschlagen worden, Acetolactatsynthase (ALS)-Hemmstoffe, die vordem nicht selektiv in Gräserkulturen wie Getreide oder Mais eingesetzt werden konnten, in Kombination mit bestimmten Herbizid-Safenern (Antidots) für den selektiven Einsatz in solchen Kulturen zur Verfügung zu stellen.

Überraschenderweise wurde nun gefunden, daß diese Antidots auch solche Kulturpflanzenschäden verhindern können, die entstehen, wenn ALS-Hemmstoffe und andere Pflanzenschutzmittel, wie Insektizide und Herbizide gemeinsam oder nacheinander, auf einen Kulturpflanzenbestand ausgebracht werden.

Neue Herbizide aus der Gruppe der Sulfonylharnstoffe (ALS-Hemmstoffe) werden zunehmend auch in Maiskulturen zur selektiven Bekämpfung von Unkräutern und Ungräsern eingesetzt, nachdem sie schon seit Jahren in Getreide- und Reiskulturen Bedeutung erlangt haben. Solche Herbizide sind beispielsweise Primisulfuron, Nicosulfuron, DPX-E-9636 Rimsulfuron und andere Sulfonylharnstoffderivate, oder Mischungen dieser Verbindungen untereinander.

Obwohl die Selektivität dieser Herbizide in Maiskulturen normalerweise gut ist, kann deren Einsatz zu Schädigungen an den Kulturpflanzen führen, wenn diese vorher oder gleichzeitig oder hinterher mit einem Insektizid, wie z. B. Terbufos, oder anderen Insektiziden aus den Gruppen der Organophosphate, Pyrethroide oder Carbamate behandelt werden. Auch wenn solche Behandlungen bis zu 20 Tage oder mehr auseinander liegen, können noch Schädigungen an den Kulturpflanzen entstehen. Auch Herbizide, wie z. B. Bentazon oder Bromoxynil, können Schäden auslösen, wenn Maiskulturen oder andere Kulturen gemeinsam oder auch zeitlich getrennt mit solchen Verbindungen und Sulfonylharnstoffherbiziden behandelt werden. Dabei spielt die Art der Behandlung keine Rolle, es kann sich um Blattspritzungen oder Bodenspritzungen handeln oder die Insektizide bzw. Herbizide können zur Saat als Granulate auf oder in den Boden ausgebracht werden, oder die Samen können gebeizt werden. Entscheidend ist nur, daß die verschiedenen Wirkstoffe letzten Endes in der Kulturpflanze zur Wirkung gelangen oder dort im pflanzlichen Stoffwechsel in Wechselwirkung treten. Die Gegenwart dieser Verbindungen behindert oder verringert den pflanzlichen Stoffwechsel der ALS-Hemmstoff-(Sulfonylharnstoff)-Herbizide, so daß Verfärbungen, Chlorosen oder sogar Blattverformungen und starke Wachstumsstörungen auftreten, die auch den Ertrag der Kulturpflanzen stark schädigen können.

Diese erwähnten Unverträglichkeiten sind für den Anwender ein wirtschaftliches Problem, weil er verschiedene Mittel nicht gemeinsam ausbringen darf oder Kulturpflanzen, wie z. B. Mais, mit bestimmten Präparaten nicht behandeln darf, die z. B. sehr wirksam oder sehr preiswert sind.

Überraschend wurde nun aber gefunden, daß solche Schädigungen an den Kulturpflanzen verringert oder ganz verhindert werden können, wenn gleichzeitig mit dem Herbizid bzw. ALS-Hemmstoff pflanzenschützende Mittel appliziert werden, wie sie in der deutschen Patentanmeldung P 40 41 120.6 vorgeschlagen worden sind, die als Antidots oder Safener wirken.

Die Erfindung betrifft daher Mischungen bzw. Anwendungskombinationen, welche
A) ALS-Hemmstoff-Herbizide und andere Pflanzenschutzmittel wie Insektizide oder Herbizide mit andersartigen Wirkungsmechanismen enthalten, unabhängig davon ob diese Präparate gemeinsam oder nacheinander ausgebracht werden, insbesondere ein oder mehrere Herbizide aus der Gruppe der Sulfonylharnstoffe, Imidazolinone und Pyrimidin- oder Triazinderivate und weitere Mittel wie Insektizide und Herbizide und
B) eine oder mehrere Verbindungen der Formeln B1 und B2, 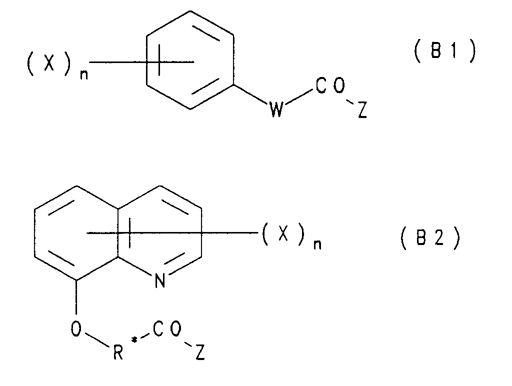 worin
   - X: Wasserstoff, Halogen, C₁-C₄-Alkyl, C₁-C₄-Alkoxy, Nitro oder C₁-C₄-Halogenalkyl bedeutet,
   - Z: OR¹, SR¹, NR¹R, wobei R H, C₁-C₆-Alkyl, C₁-C₆-Alkoxy oder gegebenenfalls substituiertes Phenyl bedeutet, oder einen gesättigten oder ungesättigten 3- bis 7-gliedrigen Heterocyclus mit mindestens einem N-Atom und bis zu 3 Heteroatomen steht, der über das N-Atom mit der Carbonylgruppe verbunden ist und unsubstituiert oder durch Reste aus der Gruppe C₁-C₄-Alkyl, C₁-C₄-Alkoxy oder gegebenenfalls substituiertes Phenyl substituiert ist, vorzugsweise einen Rest der Formel OR¹, NHR¹ oder N(CH₃), insbesondere der Formel OR¹,
   - R*: eine C₁-C₂-Alkylenkette, die noch mit ein oder zwei C₁-C₄-Alkylresten substituiert sein kann, vorzugsweise -CH₂-,
   - R¹: Wasserstoff, C₁-C₁₈-Alkyl, C₃-C₁₂-Cycloalkyl, C₂-C₈-Alkenyl oder C₂-C₈-Alkinyl,
   wobei die vorstehenden C-haltigen Reste unsubstituiert oder ein- oder mehrfach durch Reste aus der Gruppe enthaltend Halogen, Hydroxy, C₁-C₈-Alkoxy, C₁-C₈-Alkylthio, C₂-C₈-Alkenylthio, C₂-C₈-Alkinylthio, C₂-C₈-Alkenyloxy, C₂-C₈-Alkinyloxy, C₃-C₇-Cycloalkyl, C₃-C₇-Cycloalkoxy, Cyano, Mono- und Di-C₁-C₄-alkyl-amino, C₁-C₈-Alkoxy-carbonyl, C₂-C₈-Alkenyloxy-carbonyl, C₁-C₈-Alkylthio-carbonyl, C₂-C₈-Alkinyloxy-carbonyl, C₁-C₈-Alkyl-carbonyl, C₂-C₈-Alkenyl-carbonyl, C₂-C₈-Alkinyl-carbonyl, C₁-C₈-Alkyl-carbonylamino, C₂-C₈-Alkenyl-carbonylamino, C₂-C₈-Alkinyl-carbonylamino, Aminocarbonyl, C₁-C₈-Alkyl-aminocarbonyl, Di-C₁-C₆-alkyl-aminocarbonyl, C₂-C₆-Alkenyl-aminocarbonyl, C₂-C₆-Alkinyl-aminocarbonyl, C₁-C₈-Alkoxy-carbonylamino, C₁-C₈-Alkyl-amino-carbonylamino, C₁-C₆-Alkylcarbonyloxy, das unsubstituiert oder durch Halogen, NO₂, C₁-C₄-Alkoxy oder gegebenenfalls substituiertes Phenyl substituiert ist, C₂-C₆-Alkenyl-carbonyloxy, C₂-C₆-Alkinyl-carbonyloxy, C₁-C₈-Alkylsulfonyl, Phenyl, Phenyl-C₁-C₆-Alkoxy, Phenyl-C₁-C₆-alkoxy-carbonyl, Phenoxy, Phenoxy-C₁-C₆-alkoxy, Phenoxy-C₁-C₆-alkoxy-carbonyl, Phenylcarbonyloxy, Phenylcarbonylamino, Phenyl-C₁-C₆-alkyl-carbonylamino, wobei die letztgenannten 9 Reste im Phenylring unsubstituiert oder ein- oder mehrfach durch Reste aus der Gruppe Halogen, C₁-C₄-Alkyl, C₁-C₄-Alkoxy, C₁-C₄-Halogenalkyl, C₁-C₄-Halogenalkoxy und Nitro substituiert sind, und Reste der Formeln - SiR'₃, -O-SiR'₃, (R')₃Si-C₁-C₆-alkoxy, -CO-O-NR'₂, -O-N=CR'₂, - N=CR'₂, -O-NR'₂-CH(OR')₂ und -O-(CH₂)ₘ-CH(OR'₂)₂, worin die R' in den genannten Formeln unabhängig voneinander Wasserstoff, C₁-C₄-Alkyl, Phenyl, das unsubstituiert oder ein- oder mehrfach durch Reste aus der Gruppe Halogen, C₁-C₄-Alkyl, C₁-C₄-Alkoxy, C₁-C₄-Halogenalkoxy und Nitro substituiert ist, oder paarweise eine C₂-C₆-Alkylenkette und m = 0 bis 6 bedeuten, und ein Rest der Formel R''O-CHR'''(OR'')-C₁-C₆-alkoxy, worin die Reste R'' unabhängig voneinander C₁-C₄-Alkyl oder zusammen einen C₁-C₆-Alkylenrest und R''' Wasserstoff oder C₁-C₄-Alkyl bedeuten, substituiert sind,
   - n: eine ganze Zahl von 1 bis 5, vorzugsweise 1 bis 3,
   - W: ein divalenter heterocyclischer Rest mit 5 Ringatomen der Formel W1 bis W4, 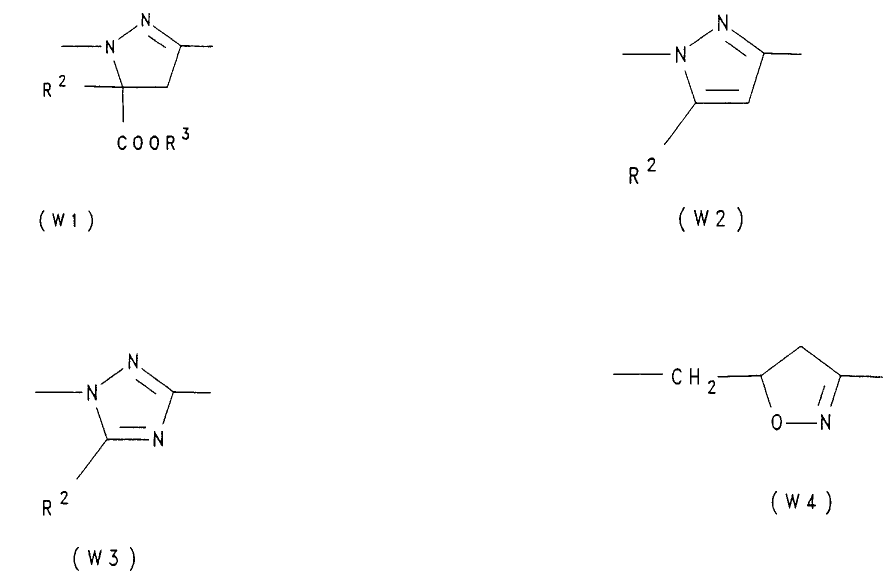 worin
   - R²: Wasserstoff, C₁-C₈-Alkyl, C₁-C₈-Haloalkyl, C₃-C₁₂-Cycloalkyl oder gegebenenfalls substituiertes Phenyl und
   - R³: Wasserstoff, C₁-C₈-Alkyl, C₁-C₈-Haloalkyl, C₁-C₄-Alkoxy-C₁-C₄-alkyl, C₁-C₆-Hydroxyalkyl, C₃-C₁₂-Cycloalkyl oder Tri-(C₁-C₄-alkyl)-silyl sind,
   bedeuten, oder die Salze der genannten Verbindungen enthalten.

Von besonderem Interesse sind erfindungsgemäße herbizide Mittel, wobei in den Verbindungen der Formeln B1 und B2,
- R¹: Wasserstoff, C₁-C₁₂-Alkyl oder C₃-C₇-Cycloalkyl, C₂-C₈-Alkenyl oder C₂-C₈-Alkinyl, wobei die vorstehenden C-haltigen Reste unsubstituiert oder ein- oder mehrfach durch Halogen oder ein- oder zweifach, vorzugsweise einfach durch Reste aus der Gruppe Hydroxy, C₁-C₄-Alkoxy, C₁-C₄-Alkylthio, C₂-C₄-Alkenyloxy, C₂-C₆-Alkinyloxy, Mono- und Di-(C₁-C₂-alkyl)-amino, (C₁-C₄-Alkoxy)-carbonyl, C₂-C₄-Alkenyloxy-carbonyl, C₂-C₄-Alkinyloxy-carbonyl, C₁-C₄-Alkyl-carbonyl, C₂-C₄-Alkenyl-carbonyl, C₂-C₄-Alkinyl-carbonyl, C₁-C₄-Alkylsulfonyl, Phenyl, Phenyl-C₁-C₄-alkoxy-carbonyl, Phenoxy, Phenoxy-C₁-C₄-alkoxy, Phenoxy-(C₁-C₄-alkoxy)-carbonyl, wobei die letztgenannten 6 Reste im Phenylring unsubstituiert oder ein- oder mehrfach durch Reste aus der Gruppe Halogen, C₁-C₂-Alkyl, C₁-C₂-Alkoxy, C₁-C₂-Halogenalkyl, C₁-C₂-Halogenalkoxy und Nitro substituiert sind, und Reste der Formeln -SiR'₃, -O-N=CR'₂, -N=CR'₂ und -O-NR'₂, worin die R' in den genannten Formeln unabhängig voneinander Wasserstoff, C₁-C₂-Alkyl, Phenyl, das unsubstituiert oder ein- oder mehrfach durch Reste aus der Gruppe Halogen, C₁-C₂-Alkyl, C₁-C₂-Alkoxy, C₁-C₂-Halogenalkyl, C₁-C₂-Halogenalkoxy und Nitro substituiert ist, oder paarweise eine C₄-C₅-Alkandiylkette bedeuten, substituiert sind
bedeutet.

Von besonderem Interesse sind auch erfindungsgemäße herbizide Mittel, wobei in den Verbindungen der Formeln B1 und B2,
- X: Wasserstoff, Halogen, Methyl, Ethyl, Methoxy, Ethoxy, C₁-C₂-Halogenalkyl, vorzugsweise Wasserstoff, Halogen oder C₁-C₂-Halogenalkyl,
bedeutet.

Bevorzugt sind erfindungsgemäße herbizide Mittel, wobei in den Verbindungen der Formel B1,
- X: Wasserstoff, Halogen, Nitro oder C₁-C₄-Halogenalkyl,
- n: eine Zahl von 1 bis 3,
- Z: ein Rest der Formel OR¹,
- R¹: Wasserstoff, C₁-C₈-Alkyl, C₃-C₇-Cycloalkyl,
wobei die vorstehenden C-haltigen Reste unsubstituiert sind oder ein- oder mehrfach durch Reste aus der Gruppe Halogen oder ein- oder zweifach, vorzugsweise unsubstituiert oder einfach, durch Reste aus der Gruppe Hydroxy, C₁-C₄-Alkoxy, (C₁-C₄-Alkoxy)-carbonyl, C₂-C₆-Alkenyloxy-carbonyl, (C₂-C₆-Alkinyloxy)-carbonyl und Reste der Formeln -SiR'₃, -O-N=CR'₂, -N=CR'₂ und -O-NR'₂, worin die Reste R' in den genannten Formeln unabhängig voneinander Wasserstoff oder C₁-C₄-Alkyl oder paarweise eine C₄-C₅-Alkylenkette bedeuten, substituiert sind,
- R²: Wasserstoff, C₁-C₈-Alkyl, C₁-C₆-Haloalkyl, C₃-C₇-Cycloalkyl oder Phenyl und
- R³: Wasserstoff, C₁-C₈-Alkyl, C₁-C₈-Haloalkyl, (C₁-C₄-Alkoxy)-C₁-C₄-alkyl, C₁-C₆-Hydroxyalkyl, C₃-C₇-Cycloalkyl oder Tri-(C₁-C₄-alkyl)-silyl
bedeuten.

Bevorzugt sind auch erfindungsgemäße herbizide Mittel, wobei in den Verbindungen der Formel B2,
- X: Wasserstoff, Halogen oder C₁-C₄-Halogenalkyl und n eine Zahl von 1 bis 3, vorzugsweise (X)ₙ = 5-Cl,
- Z: ein Rest der Formel OR¹,
- R*: CH₂ und
- R¹: Wasserstoff, C₁-C₈-Alkyl, C₁-C₈-Haloalkyl, (C₁-C₄-Alkoxy)-C₁-C₄-alkyl oder (C₁-C₄-Alkenyloxy)-C₁-C₄-alkyl, vorzugsweise C₁-C₈-Alkyl,
bedeuten.

Besonders bevorzugt sind erfindungsgemäße herbizide Mittel mit Verbindungen der Formel B1, worin
- W: W1,
- X: H, Halogen oder C₁-C₂-Halogenalkyl und n = 1 - 3, insbesondere (X)ₙ = 2,4-Cl₂,
- Z: ein Rest der Formel OR¹,
- R¹: Wasserstoff, C₁-C₈-Alkyl, C₁-C₄-Haloalkyl, C₁-C₄-Hydroxyalkyl, C₃-C₇-Cycloalkyl, (C₁-C₄-Alkoxy)-C₁-C₄-alkyl, Tri-(C₁-C₂-alkyl)-silyl, vorzugsweise C₁-C₄-Alkyl,
- R²: Wasserstoff, C₁-C₈-Alkyl, C₁-C₄-Haloalkyl oder C₃-C₇-Cycloalkyl, vorzugsweise Wasserstoff oder C₁-C₄-Alkyl, und
- R³: Wasserstoff, C₁-C₈-Alkyl, C₁-C₄-Haloalkyl, C₁-C₄-Hydroxyalkyl, C₃-C₇-Cycloalkyl, (C₁-C₄-Alkoxy)-C₁-C₄-alkyl oder Tri-(C₁-C₂-alkyl)-silyl, vorzugsweise H oder C₁-C₄-Alkyl,
bedeuten.

Besonders bevorzugt sind auch erfindungsgemäße herbizide Mittel mit Verbindungen der Formel B1, worin
- W: W2,
- X: H, Halogen oder C₁-C₂-Halogenalkyl und n = 1 - 3, insbesondere (X)ₙ = 2,4-Cl₂,
- Z: ein Rest der Formel OR¹,
- R¹: Wasserstoff, C₁-C₈-Alkyl, C₁-C₄-Haloalkyl, C₁-C₄-Hydroxyalkyl, C₃-C₇-Cycloalkyl, (C₁-C₄-Alkoxy)-C₁-C₄-alkyl, Tri-(C₁-C₂-alkyl)-silyl, vorzugsweise C₁-C₄-Alkyl und
- R²: Wasserstoff, C₁-C₈-Alkyl, C₁-C₄-Haloalkyl, C₃-C₇-Cycloalkyl oder Phenyl, vorzugsweise Wasserstoff oder C₁-C₄-Alkyl,
bedeuten.

Besonders bevorzugt sind auch erfindungsgemäße herbizide Mittel mit Verbindungen der Formel B1, worin
- W: W3,
- X: H, Halogen oder C₁-C₂-Halogenalkyl und n = 1 - 3, insbesondere (X)ₙ = 2,4-Cl₂,
- Z: ein Rest der Formel OR¹,
- R¹: Wasserstoff, C₁-C₈-Alkyl, C₁-C₄-Haloalkyl, C₁-C₄-Hydroxyalkyl, C₃-C₇-Cycloalkyl, (C₁-C₄-Alkoxy)-C₁-C₄-alkyl, Tri-(C₁-C₂-alkyl)-silyl, vorzugsweise C₁-C₄-Alkyl und
- R²: C₁-C₈-Alkyl oder C₁-C₄-Haloalkyl, vorzugsweise C₁-Haloalkyl,
bedeuten.

Besonders bevorzugt sind auch erfindungsgemäße herbizide Mittel mit Verbindungen der Formel B1, worin
- W: W4,
- X: Wasserstoff, Halogen, Nitro, C₁-C₄-Alkyl oder C₁-C₂-Halogenalkyl, vorzugsweise CF₃, oder C₁-C₄-Alkoxy,
- n: 1 bis 3,
- Z: ein Rest der Formel OR¹,
- R¹: Wasserstoff, C₁-C₄-Alkyl, oder (C₁-C₄-Alkoxy)-carbonyl-C₁-C₄-alkyl, vorzugsweise (C₁-C₄-Alkoxy)-CO-CH₂-, (C₁-C₄-Alkoxy)-CO-C(CH₃)H-, HO-CO-CH₂- oder HO-CO-C(CH₃)H-,
bedeuten.

In den Formeln sind Alkyl, Alkenyl und Alkinyl geradkettig oder verzweigt; entsprechendes gilt für substituierten Alkyl-, Alkenyl- und Alkinylreste wie Haloalkyl, Hydroxyalkyl, Alkoxycarbonyl etc.; Alkyl bedeutet z. B. Methyl, Ethyl, n- und i-Propyl, n-, i-, t- und 2-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl; Alkenyl bedeutet z. B. Allyl, 1-Methylprop-2-en-1-yl, But-2-en-1-yl, But-3-en-1-yl, 1-Methyl-but-3-en und 1-Methyl-but-2-en; Alkinyl bedeutet z. B. Propargyl, But-2-in-1-yl, But-3-in-1-yl, 1-Methyl-but-3-in; Halogen bedeutet Fluor, Chlor, Brom oder Jod, vorzugsweise Fluor, Chlor oder Brom, insbesondere Fluor oder Chlor; Haloalkyl, -alkenyl und -alkinyl bedeuten durch Halogen substituiertes Alkyl, Alkenyl bzw. Alkinyl, z. B. wie CF₃, CHF₂, CH₂F, CF₃CF₂, CH₂FCHCl, CCl₃, CHCl₂, CH₂CH₂Cl; Haloalkoxy ist z. B. OCF₃, OCHF₂, OCH₂F, CF₃CF₂O, CF₃CH₂O; gegebenenfalls substituiertes Phenyl ist z.B. Phenyl, das unsubstituiert ist oder ein- oder mehrfach durch Reste aus der Gruppe Halogen, C₁-C₄-Alkyl, C₁-C₄-Alkoxy, C₁-C₄-Halogenalkyl, C₁-C₄-Halogenalkoxy und Nitro substituiert ist, z. B. o-, m- und p-Tolyl, Dimethylphenyle, 2-, 3- und 4-Chlorphenyl, 2-, 3- und 4-Trifluor- und -Trichlorphenyl, 2,4-, 3,5-, 2,5- und 2,3-Dichlorphenyl, o-, m- und p-Methoxyphenyl.

Die Verbindungen der Formeln B1 sind aus EP-A-333 131, EP-A-269 806, EP-A-346 620, Internationale Patentanmeldung PCT/EP 90/01966 und Internationale Anmeldung Nr. PCT/EP 90/02020 und dort zitierter Literatur bekannt oder können nach oder analog den dort beschriebenen Verfahren hergestellt werden. Die Verbindungen der Formel B2 sind aus EP-A-86 750, EP-A-94 349 und EP-A-191 736 und dort zitierter Literatur bekannt oder können nach oder analog den dort beschriebenen Verfahren hergestellt werden. Sie werden ferner in der deutschen Patentanmeldung P 40 41 121.4 vorgeschlagen.

Als Mischkombinationen des Typ A eignen sich erfindungsgemäß ALS-Hemmstoffherbizide, wie Sulfonylharnstoffe und Imidazolinone, sowie substituierte Pyrimidine und Triazone, die in Mischung oder bei getrennter Ausbringung mit anderen Pflanzenschutzmitteln, wie Insektiziden z. B. Organophosphaten oder Herbiziden, eingesetzt werden.

Solche ALS-Hemmstoffe vom Typ der Sulfonylharnstoffe sind z. B. die bekannten Verbindungen Primisulfuron-methyl, Nicosulfuron, DPX-E-9636, Amidosulfuron Thiameturon-methyl, NC319 (EP-A-282 613) und andere bekannt gewordene Wirkstoffe sowie Pyridylsulfonylharnstoffe (deutsche Patentanmeldung P 40 30 577.5) und Alkoxyphenoxysulfonylharnstoffe (EP-A-342 569) und Mischungen dieser genannten Wirkstoffe untereinander.

Geeignet sind Pyridylsulfonylharnstoffe der Formel A1 oder ihre Salze, 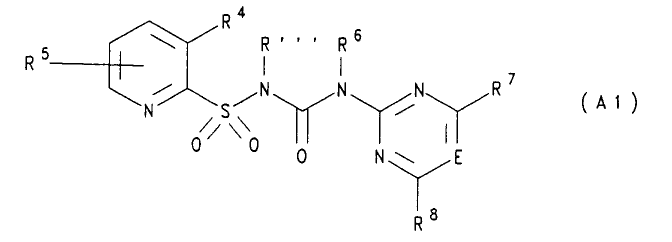
worin
- R''': H, Alkalimetall, 1 Äquivalent Erdalkalimetall, Mono-, Di- oder Trialkylammonium,
- E: CH oder N
- R⁴: Halogen oder NR⁹R¹⁰,
- R⁵: H, Halogen, Cyano, C₁-C₃-Alkyl, C₁-C₃-Alkoxy, C₁-C₃-Haloalkyl, C₁-C₃-Haloalkoxy, C₁-C₃-Alkylthio, (C₁-C₃-Alkoxy)-C₁-C₃-alkyl,(C₁-C₃-Alkoxy)-carbonyl, Mono- oder Di(C₁-C₃-alkyl)-amino, C₁-C₃-Alkyl-sulfinyl oder -sulfonyl, SO₂-NR^{a}R^{b} oder CO-NR^{a}R^{b},
- R⁶: H oder CH₃,
- R⁷: Halogen, C₁-C₂-Alkyl, C₁-C₂-Alkoxy, C₁-C₂-Haloalkyl, C₁-C₂-Haloalkoxy oder OCH₂CF₃,
- R⁸: C₁-C₂-Alkyl, C₁-C₂-Haloalkoxy oder C₁-C₂-Alkoxy und
- R⁹: C₁-C₄-Alkyl und R¹⁰ C₁-C₄-Alkylsulfonyl oder R⁹ und R¹⁰ gemeinsam eine Kette der Formel -(CH₂)₃SO₂- oder -(CH₂)₄SO₂- bedeuten,
oder sind Alkoxyphenoxysulfonylharnstoffe der Formel A2 oder deren Salze, 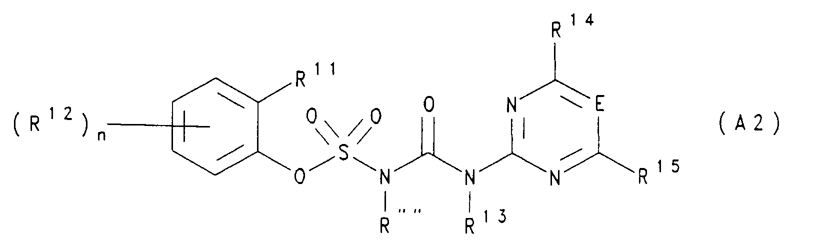
worin
- R'''': H, Alkalimetall, 1 Äquivalent Erdalkalimetall, Mono-, Di- oder Trialkylammonium,
- E: CH oder N,
- R¹¹: Methoxy, Ethoxy, Propoxy, Isopropoxy oder C₁-C₄-Alkoxycarbonyl,
- R¹²: Wasserstoff, Halogen, NO₂, CF₃, CN, C₁-C₄-Alkyl, C₁-C₄-Alkoxy, C₁-C₄-Alkylthio oder (C₁-C₃-Alkoxy)-carbonyl,
- n: 1, 2 oder 3,
- R¹³: Wasserstoff, C₁-C₄-Alkyl oder C₃-C₄-Alkenyl,
- R¹⁴, R¹⁵: unabhängig voneinander Halogen, C₁-C₂-Alkyl, C₁-C₂-Alkoxy, C₁-C₂-Haloalkyl, C₁-C₂-Haloalkoxy oder (C₁-C₂-Alkoxy)-C₁-C₂-alkyl
bedeuten.

ALS-Hemmstoffe vom Typ der Imidazolinone sind Imazethapyr, Imazaquin, Imazethamethapyr (AC-263222) und andere verwandte Verbindungen und Mischungen daraus.

Geeignete substituierte Pyrimidine und Triazine haben die Formel C, 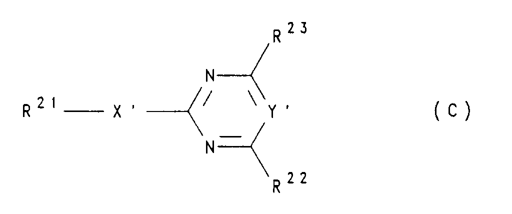
in welcher
- X': O, S oder NR²⁴ bedeutet,
- Y': N oder CH bedeutet,
R²² und R²³ unabhängig voneinander Wasserstoff, Alkyl, Halogenalkyl, Alkoxy Halogenalkoxy, C₁-C₄-Alkylmercapto, C₁-C₄-Alkylamino oder Di-C₁-C₄-alkylamino bedeuten,
- R²¹: einen substituierten Aryl- oder Heteroarylrest der Formel 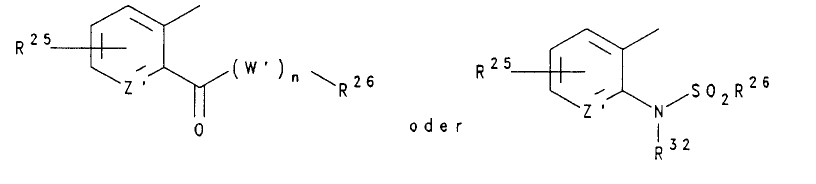 bedeutet,
- n': 0 oder 1 ist,
- W': -O-, -NR²⁴-, -S-, -ON(R³¹)- oder -O-N=C(R³¹)- bedeutet,
- Z': N, N→O oder CR²⁴ bedeutet,
- R²⁴: wie R²² oder R²³ definiert ist,
- R²⁵: Halogen, Cyano, Nitro, C₁-C₄-Alkyl, C₂-C₄-Alkenyl, C₂-C₄-Alkinyl, C₁-C₄-Alkoxy, Halogenalkyl oder Halogenalkoxy bedeutet,
- R²⁶: C₁-C₄-Alkyl, C₂-C₄-Alkenyl, C₂-C₄-Alkinyl, Alkalimetall oder 1 Äquivalent Erdalkalimetall, Alkylammonium, Aryl, CF₃ oder (CHR³³)_{m'}CHR²⁷R²⁸ mit m' = 0 oder 1 bedeutet,
- R²⁷: und R³³ unabhängig voneinander Wasserstoff, C₁-C₄-Alkyl oder C₁-C₄-Alkoxy bedeuten,
- R²⁸: C₁-C₄-Alkoxycarbonyl, Cyano, Halogen, Acetyl, Pivaloyl, Benzoyl, C₁-C₄-Alkoxy, Aryloxy, Halogenacetoxy, Methansulfonyloxy, Hydroxy, C₁-C₄-Alkylmercapto, C₁-C₄-Alkylsulfonyl, Arylmercapto, Di-C₁-C₄-alkylamino, Pyridyl, Aryl oder CONR²⁹R³⁰ bedeutet,
- R²⁹ und R³⁰: unabhängig voneinander Wasserstoff, C₁-C₄-Alkyl, C₂-C₄-Alkenyl, Aryl oder Benzyl bedeuten,
- R³¹: Wasserstoff oder C₁-C₄-Alkyl bedeutet oder
- R²⁶ und R³: ¹ zusammen für Methylen, Ethandiyl oder Propandiyl stehen und
- Aryl =: Phenyl oder Naphthyl bedeutet, das jeweils unsubstituiert oder ein- oder zweifach substituiert ist durch Halogen, C₁-C₄-Alkyl, C₁-C₄-Alkoxy, Phenoxy, Nitro und/oder C₁-C₄-Alkoxycarbonyl,
oder
- R¹¹: einen Rest der Formel 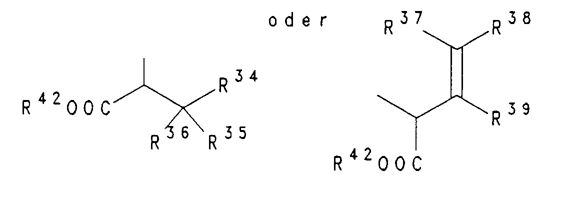 bedeutet,
- R³⁴: Wasserstoff, Halogen, Halogen-C₁-C₄-alkyl, C₁-C₄-Alkyl, Cycloalkyl, C₁-C₄-Alkylmercapto-C₁-C₄-alkyl, Hydroxy-C₁-C₄-alkyl, Hydroxy, Cyano, Aryloxyalkyl, Thienyl, Aryl, Dihydronaphthyl oder 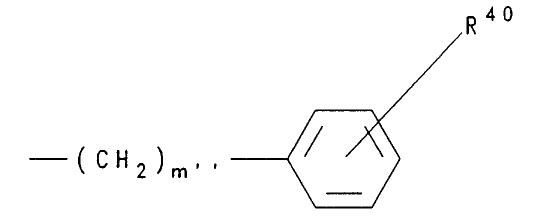 bedeutet, wobei Aryl wie oben definiert ist,
- R⁴⁰: Wasserstoff, Halogen, Nitro, C₁-C₄-Alkyl, C₁-C₄-Alkoxy oder S(O)_{p'}R⁴¹ bedeutet,
- R⁴¹: Alkyl bedeutet,
- p': eine 0, 1 oder 2 ist,
- m'': eine 0, 1 oder 2 ist,
- R³⁵ und R³⁶: unabhängig voneinander Wasserstoff oder C₁-C₄-Alkyl bedeuten, oder diese zusammen mit dem C-Atom für einen 3-, 4-, 5- oder 6-gliedrigen Cycloalkan-Ring stehen, worin eine Methylengruppe durch Sauerstoff ersetzt sein kann und welcher durch eine oder zwei C₁-C₄-Alkylgruppen substituiert sein kann,
- R³⁷ und R³⁸: unabhängig voneinander Wasserstoff oder C₁-C₄-Alkyl bedeuten,
- R³⁹: C₁-C₄-Alkyl oder Phenyl bedeutet, oder
- R³⁸ und R³⁹: für -(CH₂)ₗ- stehen mit l = 3 oder 4, welches durch eine oder zwei C₁-C₄-Alkylgruppen substituiert sein kann,
- R⁴²: Wasserstoff, C₁-C₄-Alkyl, C₁-C₄-Alkenyl, C₁-C₄-Alkinyl, Phenyl, C₁-C₄-Alkylidenamino, C₁-C₄-Alkoxycarbonyl-C₁-C₄-alkyl, C₁-C₄-Alkoxy-C₁-C₄-alkyl, Halogen-C₁-C₄-alkyl, Cycloalkyl, nitrosubstituiertes Phenylmercapto-C₁-C₄-alkyl, Halogen oder Benzyl, das durch C₁-C₄-Alkyl oder C₁-C₄-Alkoxy substituiert sein kann, Alkalimetall, 1 Äquivalent Erdalkalimetall, Mono-, Di- oder Trialkylammonium, bedeutet.

Die verschiedenen Typen der ALS-Hemmstoffe können auch untereinander gemischt werden. Auch andere Wirkstoffstrukturen, die das Enzym ALS hemmen, z. B. herbizide Sulfonamide wie Flumetsulam (DE-498) u. a., kommen hier in Betracht. Als Kombinationspartner in der "Mischung" vom Typ A kommen folgende Pflanzenschutzmittel in Betracht, wobei die Einzelkomponenten zusammen oder getrennt voneinander im zeitlichen Abstand von bis zu mehreren Wochen ausgebracht werden können:
1.) Insektizide Präparate wie Organophosphate z. B. Terbufos (®Counter), Fonofos (®Dyfonate), Phorate (®Thimet), Chlorpyrifos (®Reldan) und andere verwandte Wirkstoffe, insektizide Carbamate wie z. B. Carbofuran (®Furadan) und andere; sowie Pyrethroid-Insektizide wie z. B. Tefluthrin (®Force), Deltamethrin (®Decis) und Tralomethrin (®Scout) und andere; sowie andere insektizide Mittel mit andersartigem Wirkungsmechanismus.
2.) Herbizide, die als Partner eingesetzt werden, um das Wirkungsspektrum von ALS-Hemmstoffen zu erweitern und die Wirksamkeit zu verbessern, wie z. B. Bentazon, Cyanazin, Bromoxynil oder andere Herbizide, die übers Blatt aufgenommen werden.

Folgende Gruppen von Verbindungen haben sich als Safener für die oben erwähnten Produktkombinationen bewährt:
a) Verbindungen vom Typ der Dichlorphenylpyrazolin-3-carbonsäure (d. h. der Formel B1, worin W = W1 und (X)ₙ = 2,4-Cl₂), vorzugsweise Verbindungen wie 1-(2,4-Dichlorphenyl)-5-(ethoxycarbonyl)-5-methyl-2-pyrazolin-3-carbonsäureethylester (B1-1) und verwandte Verbindungen, wie sie in der internationalen Anmeldung PCT/EP 90/02020 beschrieben sind,
b) Derivate der Dichlorphenylpyrazolcarbonsäure (d. h. der Formel B1, worin W = W2 und (X)ₙ = 2,4-Cl₂), vorzugsweise Verbindungen wie 1-(2,4-dichlorphenyl)-5-methyl-pyrazol-3-carbonsäureethylester (B1-2), 1-(2,4-dichlorphenyl)-5-isopropyl-pyrazol-3-carbonsäureethylester (B1-3), 1-(2,4-dichlorphenyl)-5-(1,1-dimethyl-ethyl)pyrazol-3-carbonsäureethylester (B1-4), 1-(2,4-dichlorphenyl)-5-phenyl-pyrazol-3-carbonsäureethylester (B1-5) und verwandte Verbindungen, wie sie in EP-A-0 333 131 und EP-A-0 269 806 beschrieben sind.
c) Verbindungen vom Typ der Triazolcarbonsäuren (d. h. der Formel B1, worin W = W3 und (X)ₙ = 2,4-Cl₂), vorzugsweise Verbindungen wie 1-(2,4-dichlorphenyl)-5-trichlormethyl-(1H)-1,2,4-triazol-3-carbonsäureethylester (B1-6, Fenchlorazol) und verwandte Verbindungen (siehe EP-A-0 174 562 und EP-A-0 346 620);
d) Verbindungen des Typs Dichlorbenzyl-2-isoxazolin-3-carbonsäure (d. h. der Formel B1, worin W = W4 und (X)ₙ = 2,4-Cl₂), vorzugsweise Verbindungen wie 5-(2,4-dichlorbenzyl)-2-isoxazolin-3-carbonsäureethylester (B1-7) und verwandte Verbindungen, wie sie in der Internationalen Anmeldung PCT/EP 90/01966 beschrieben sind.
e) Verbindungen vom Typ der (5-Chlor-8-chinolinoxy)-essigsäure (d. h. der Formel B2, worin (X)ₙ = 5-Cl, Z = OR¹, R* = CH₂), vorzugsweise Verbindungen wie (5-Chlor-8-chinolinoxy)-essigsäure-(1-methyl-hex-1-yl)-ester (B2-1), (5-Chlor-8-chinolinoxy)-essigsäure-(1,3-dimethyl-but-1-yl)-ester (B2-2), (5-Chlor-8-chinolinoxy)-essigsäure-(2-allyloxy-1-methylethyl)-ester (B2-3) und verwandte Verbindungen, wie sie in EP-A-86 750, EP-A-94 349 und EP-A-191 736 und der deutschen Patentanmeldung P 40 41 121.4 beschrieben bzw. vorgeschlagen worden sind.

Die Safener (Antidote) der vorstehenden Gruppen a) bis e) reduzieren oder unterbinden phytotoxische Effekte, die beim Einsatz der Produktkombinationen in Nutzpflanzenkulturen auftreten können, ohne die Wirksamkeit der Herbizide gegen Schadpflanzen zu beeinträchtigen. Hierdurch kann das Einsatzgebiet der Mischungen ganz erheblich erweitert und z. B. auf Kulturen wie Mais, Weizen, Gerste und andere Gramineen-Kulturen ausgedehnt werden, in denen bisher ein Einsatz der Kombinationen nicht möglich oder nur beschränkt, das heißt, in niedrigen Dosierungen mit wenig Breitenwirkung möglich ist.

Die herbiziden ALS-Hemmstoffe und ihre Kombinationspartner und die erwähnten Safener können zusammen (als fertige Formulierung oder im Tank-mix-Verfahren) oder in beliebiger Reihenfolge nacheinander ausgebracht werden. Das Gewichtsverhältnis Safener: Herbizid (ALS-Hemmstoff) kann innerhalb weiter Grenzen variieren und ist vorzugsweise im Bereich von 1 : 10 bis 10 : 1, insbesondere von 1 : 10 bis 5 : 1. Die jeweils optimalen Mengen an Herbizid und Safener sind vom Typ des verwendeten Herbizids oder vom verwendeten Safener sowie von der Art des zu behandelnden Pflanzenbestandes abhängig und lassen sich von Fall zu Fall durch entsprechende Vorversuche ermitteln. Die Aufwandmenge des zusätzlich eingesetzten Insektizids oder Herbizids ist allein von dessen Wirksamkeit abhängig und entspricht den allgemeinen Produktempfehlungen.

Haupteinsatzgebiete für die Anwendung der Safener sind vor allem Mais und Getreidekulturen(Weizen, Roggen, Gerste, Hafer), Reis und Sorghum, aber auch Baumwolle und Sojabohne, vorzugsweise Mais.

Die Safener vom Typ B können je nach ihren Eigenschaften zur Vorbehandlung des Saatgutes der Kulturpflanze (Beizung der Samen) verwendet werden oder vor der Saat in die Saatfurchen eingebracht oder zusammen mit dem Herbizid vor oder nach dem Auflaufen der Pflanzen angewendet werden. Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit dem Herbizid, d. h. mit dem ALS-Hemmstoff. Hierzu können Tankmischungen oder Fertigformulierungen eingesetzt werden.

Die benötigten Aufwandmengen der Safener können je nach Indikation und verwendetem Herbizid innerhalb weiter Grenzen schwanken und sind in der Regel im Bereich von 0,001 bis 1 kg, vorzugsweise 0,005 bis 0,2 kg Wirkstoff je Hektar.

Gegenstand der vorliegenden Erfindung ist deshalb auch ein Verfahren zum Schutz von Kulturpflanzen vor phytotoxischen Nebenwirkungen von Herbizid-Kombinationen, das dadurch gekennzeichnet ist, daß eine wirksame Menge einer Verbindung des genannten Typs B) vor, nach oder gleichzeitig mit dem Herbizid des genannten Typs A) in Kombination mit einem Insektizid oder Herbizid auf die Pflanzen, Pflanzensamen oder die Anbaufläche appliziert wird.

Die Verbindungen des Typs B) und deren Kombinationen mit einem oder mehreren der genannten Herbizide (ALS-Hemmstoffe) können auf verschiedene Art formuliert werden, je nachdem welche biologischen und/oder chemisch-physikalischen Parameter vorgegeben sind. Als Formulierungsmöglichkeiten kommen beispielsweise in Frage:
Spritzpulver (WP), emulgierbare Konzentrate (EC), wasserlösliche Pulver (SP), wasserlösliche Konzentrate (SL), konzentrierte Emulsionen (EW) wie Öl-in-Wasser und Wasser-in-Öl-Emulsionen, versprühbare Lösungen oder Emulsionen, Kapselsuspensionen (CS), Dispersionen auf Öl- oder Wasserbasis (SC), Suspoemulsionen, Suspensionskonzentrate, Stäubemittel (DP), ölmischbare Lösungen (OL), Beizmittel, Granulate (GR) in Form von Mikro-, Sprüh-, Aufzugs- und Adsorptionsgranulaten, Granulate für die Boden- bzw. Streuapplikation, wasserlösliche Granulate (SG), wasserdispergierbare Granulate (WG), ULV-Formulierungen, Mikrokapseln und Wachse.

Diese einzelnen Formulierungstypen sind im Prinzip bekannt und werden beispielsweise beschrieben in: Winnacker-Küchler, "Chemische Technologie" Band 7, C. Hauser Verlag München, 4. Aufl. 1986; Wade van Valkenburg, "Pesticide Formulations", Marcel Dekker N.Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v.Olphen "Intruduction to Clay Colloid Chemistry", 2nd Ed., J. Wiley & Sons, N.Y., Marsden "Solvents Guide", 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie Insektiziden, Fungiziden, Düngemitteln und/oder Wachstumsregulatoren herstellen, z. B. in Form einer Fertigformulierung oder als Tank-mix.

Spritzpulver sind in Wasser gleichmäßig dispergierbare Präparate, die neben dem Wirkstoff außer einem Verdünnungs- oder Inertstoff noch Netzmittel, z. B. polyoxethylierte Alkylphenole, polyoxethylierte Fettalkohole und Fettamine, Fettalkoholpolyglykolethersulfate, Alkansulfonate oder Alkylarylsulfonate und Dispergiermittel, z.B. ligninsulfonsaures Natrium, 2,2-dinaphthylmethan-6,6'-disulfonsaures Natrium, dibutylnaphthalinsulfonsaures Natrium oder auch oleoylmethyltaurinsaures Natrium enthalten.

Emulgierbare Konzentrate werden durch Auflösen des Wirkstoffes in einem organischen Lösungsmittel, z. B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte (z.B. Blockpolymere), Alkylpolyether, Sorbitanfettsäureester, Polyoxyethylensorbitanfettsäureester oder Polyoxethylensorbitester.

Stäubemittel erhält man durch Vermahlen des Wirkstoffes mit fein verteilten festen Stoffen, z. B. Talkum, natürlichen Tonen, wie Kaolin, Bentonit und Pyrophillit oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z. B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Die agrochemischen Zubereitungen enthalten in der Regel 0,1 bis 99 Gew.-%, insbesondere 0,1 bis 95 Gew.-%, Wirkstoffe des Typs B) oder des Antidot/Herbizid-Wirkstoffgemischs A) und B) und 1 bis 99,9 Gew.-%, insbesondere 5 bis 99,8 Gew.-%, eines festen oder flüssigen Zusatzstoffes und 0 bis 25 Gew.-%, insbesondere 0,1 bis 25 Gew.-%, eines Tensides.

In Spritzpulvern beträgt die Wirkstoffkonzentration z. B. etwa 10 bis 90 Gew.-%, der Rest zu 100 Gew.-% besteht aus üblichen Formulierungsbestandteilen. Bei emulgierbaren Konzentraten beträgt die Wirkstoffkonzentration etwa 1 bis 80 Gew.-% Wirkstoffe. Staubförmige Formulierungen enthalten etwa 1 bis 20 Gew.-% an Wirkstoffen, versprühbare Lösungen etwa 0,2 bis 20 Gew.-% Wirkstoffe. Bei Granulaten wie wasserdispergierbaren Granulaten hängt der Wirkstoffgehalt zum Teil davon ab, ob die wirksame Verbindung flüssig oder fest vorliegt. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations-, Lösungsmittel, Füll- oder Trägerstoffe.

Zur Anwendung werden die in handelsüblicher Form vorliegenden Formulierungen gegebenenfalls in üblicher Weise verdünnt, z. B. bei Spritzpulvern, emulgierbaren Konzentraten, Dispersionen und wasserdispergierbaren Granulaten mittels Wasser.Staubförmige Zubereitungen, Granulate sowie versprühbare Lösungen werden vor der Anwendung üblicherweise nicht mehr mit weiteren inerten Stoffen verdünnt. Besonders gute Wirksamkeiten der erfindungsgemäßen Mittel können erzielt werden, wenn zusätzlich zu den in den Formulierungen enthaltenen Tensiden weitere Netzmittel in Konzentrationen von 0,1 bis 0,5 Gew.-% im Tank-mix-Verfahren zugesetzt werden, z. B. nichtionische Netzmittel oder Netzmittel vom Typ der Fettalkoholpolyolethersulfate (siehe z. B. Deutsche Patentanmeldung P 40 29 304.1). Mit den äußeren Bedingungen wie Temperatur, Feuchtigkeit, der Art des verwendeten Herbizids u. a. variiert die erforderliche Aufwandmenge der "Safener".

Folgende Beispiele dienen zur Erläuterung der Erfindung, ohne daß diese darauf beschränkt wäre:

### A. Formulierungsbeispiele

a) Ein Stäubmittel wird erhalten, indem man 10 Gew.-Teile einer Verbindung des Typs B) oder eines Wirkstoffgemischs vom Typ A) und einem Safener vom Typ B) und 90 Gew.-Teile Talkum als Inertstoff mischt und in einer Schlagmühle zerkleinert.
b) Ein in Wasser leicht dispergierbares, benetzbares Pulver wird erhalten, indem man 25 Gewichtsteile einer Verbindung des Typs B) oder eines Wirkstoffgemischs Typ A) und einem Safener von Typ B), 64 Gewichtsteile kaolinhaltigen Quarz als Inertstoff, 10 Gewichtsteile ligninsulfonsaures Kalium und 1 Gew.-Teil oleoylmethyltaurinsaures Natrium als Netz- und Dispergiermittel mischt und in einer Stiftmühle mahlt.
c) Ein in Wasser leicht dispergierbares Dispersionskonzentrat wird erhalten, indem man 20 Gewichtsteile einer Verbindung des Typs B) oder eines Wirkstoffgemischs vom Typ A) und einem Safener vom Typ B), 6 Gew.- Teil Alkylphenolpolyglykolether (®Triton X 207), 3 Gew.-Teile Isotridecanolpolyglykolether (8 EO) und 71 Gew.-Teile paraffinischem Mineralöl (Siedebereich z. B. ca. 255 bis über 277 °C) mischt und in einer Reibkugelmühle auf eine Feinheit von unter 5 Mikron vermahlt.
d) Ein emulgierbares Konzentrat wird erhalten aus 15 Gew.-Teilen einer Verbindung des Typs B) oder eines Wirkstoffgemischs vom Typ A) und einem Safener vom Typ B), 75 Gew.-Teilen Cyclohexanon als Lösemitte] und 10 Gew.-Teilen oxethyliertes Nonylphenol als Emulgator.
e) Ein in Wasser dispergierbares Granulat wird erhalten, indem man

| | |
|---|---|
| 75 Gew.-Teile | einer Verbindung des Typs B) oder eines Wirkstoffgemischs vom Typ A) und einem Safener vom Typ B), |
| 10 " | ligninsuffonsaures Calcium, |
| 5 " | Natriumlaurylsulfat, |
| 3 " | Polyvinylalkohol und |
| 7 " | Kaolin |

mischt, auf einer Stiftmühle mahlt und das Pulver in einem Wirbelbett durch Aufsprühen von Wasser als Granulierflüssigkeit granuliert.
f) Ein in Wasser dispergierbares Granulat wird auch erhalten, indem man

| | |
|---|---|
| 25 Gew.-Teile einer | Verbindung des Typs B) oder eines Wirkstoffgemischs vom Typ A) und einem Safener vom Typ B), |
| 5 " | 2,2'-dinaphthylmethan-6,6'-disulfonsaures Natrium, |
| 2 " | oleoylmethyltaurinsaures Natrium, |
| 1 " | Polyvinylalkohol, |
| 17 " | Calciumcarbonat und |
| 50 " | Wasser |

auf einer Kolloidmühle homogensiert und vorzerkleinert, anschließend auf einer Perlmühle mahlt und die so erhaltene Suspension in einem Sprühturm mittels einer Einstoffdüse zerstäubt und trocknet.
Die zusätzlich verwendeten Insektizide oder Herbizide können sowohl im Tank-mix-Verfahren zugegeben werden, oder getrennt von der Fertigformulierung bestehend aus ALS-Hemmstoff und Safener vom Typ B, ausgebracht werden.
Das Wirkstoffgemisch A besteht jeweils aus einem ALS-Hemmstoff und einem Insektizid und/oder einem weiteren Herbizid.

### B. Biologische Beispiele

Die Kulturpflanzen wurden im Freiland oder im Gewächshaus in Plastiktöpfen bis zum 4-Blattstadium herangezogen und dann erfindungsgemäß mit Verbindungen vom Typ A) und B) im Nachauflaufverfahren behandelt. Die Verbindungen vom Typ A) und B) wurden dabei in Form wäßriger Suspensionen bzw. Emulsionen mit einer Wasseraufwandmenge von umgerechnet 300 l/ha ausgebracht. 4 Wochen nach der Behandlung wurden die Pflanzen visuell auf jede Art von Schädigung durch die ausgebrachten Herbizide bonitiert, wobei insbesondere das Ausmaß der anhaltenden Wachstumshemmung berücksichtigt wurde. Die Bewertung erfolgte in Prozentwerten im Vergleich zu unbehandelten Kontrollen.

Die Ergebnisse der folgenden Tabellen veranschaulichen, daß die erfindungsgemäßen eingesetzten Verbindungen vom Typ B) starke Schäden an Kulturpflanzen effektiv reduzieren können. Selbst sehr schwere Schädigungen werden deutlich reduziert und geringere Schäden völlig aufgehoben. Kombinationen aus ALS-Hemmstoffen und Mischungspartnern und Verbindungen vom Typ B) eignen sich deshalb in ausgezeichneter Weise zur selektiven Unkrautbekämpfung in Mais.

### Beispiel 1

| Typ A Herbizid-Kombination (ALS-Hemmstoff) | Typ B Safener | Typ A g AS/ha | Typ B g AS/ha | % Schädigung an der Kulturpflanze Mais |
|---|---|---|---|---|
| H₁ + Terbufos | - | 25 + 500 | 0 | 100 |
| | | 12 + 500 | 0 | 80 |
| Primisulfuron | - | 100 + 500 | 0 | 100 |
| + Terbufos | | 50 + 500 | 0 | 70 |
| Nicosulfuron | - | 200 + 500 | 0 | 90 |
| + Terbufos | | 100 + 500 | 0 | 80 |
| Terbufos | - | 500 | 0 | 0 |
| Primisulfuron | B2-1 | 100 + 500 | 100 | 70 |
| | | 50 + 500 | 50 | 40 |
| H₁ + Terbufos | B2-2 | 25 + 500 | 25 | 50 |
| | | 12 + 500 | 12 | 20 |
| Nicosulfuron | B2-3 | 200 + 500 | 200 | 40 |
| + Terbufos | | 100 + 500 | 100 | 30 |
| H₁ | - | 25 | 0 | 40 |
| | | 12 | 0 | 10 |
| Primisulfuron | - | 100 | 0 | 50 |
| | | 50 | 0 | 40 |
| Nicosulfuron | - | 200 | 0 | 30 |
| | | 100 | 0 | 20 |

Gewächshausversuch mit 4 Wiederholungen.

Maisaussaat in reiner Sandkultur. Terbufos wurde unmittelbar nach der Saat als Granulat auf die Bodenoberfläche ausgestreut. Alle übrigen Behandlungen erfolgten in 4-Blattstadium. Maissorte "®FELIX".

H₁ =

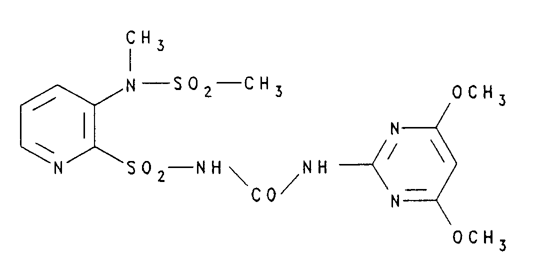

### Biologisches Beispiel:

| | Typ AS/ha | % Schäden an Mais-Sorten | |
|---|---|---|---|
| | | FELIX | DEA |
| Bentazon | 2.0 | 0 | 0 |
| | 1.0 | 0 | 0 |
| | 0.5 | 0 | 0 |
| Bromoxynil | 1.0 | 20 | 30 |
| | 0.5 | 20 | 30 |
| | 0.25 | 15 | |
| Primisulfuron | 0.100 | 25 | 20 |
| | 0.050 | 10 | 8 |
| | 0.025 | 5 | 5 |
| Bentazon + | 2.0 + 0.05 | 30 | 35 |
| + Primisulfuron | 1.0 + 0.05 | 15 | 20 |
| Bentazon + | 2.0 + 0.05 + 0.1 | 10 | 15 |
| + Primisulfuron | 1.0 + 0.05 + 0.1 | 0 | 5 |
| + H₁ | | | |
| Bromoxynil + | 1.0 + 0.05 | 55 | 50 |
| + Primisulfuron | 0.5 + 0.05 | 40 | 35 |
| Bromoxynil + | 1.0 + 0.05 + 0.1 | 15 | 15 |
| + Primisulfuron | 0.5 + 0.05 + 0.1 | 5 | 0 |
| + H₁ | | | |

Applikation im 4-Blattstadium des Mais, Höhe 23 - 26 cm.

Bonitur: 4 Wochen nach Behandlung

## Patentansprüche

1. Herbizide Mittel, dadurch gekennzeichnet, daß sie
A) ein oder mehrere Herbizide aus der Gruppe der Sulfonylharnstoffe, Imidazolinone und Pyrimidin- oder Triazinderivate und weitere Mittel wie Insektizide und Herbizide und
B) eine oder mehrere Verbindungen der Formeln B1 und B2, 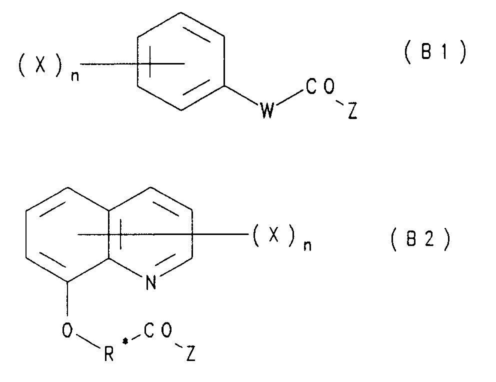 worin
X Wasserstoff, Halogen, C₁-C₄-Alkyl, C₁-C₄-Alkoxy, Nitro oder C₁-C₄-Halogenalkyl,
Z OR¹, SR¹, NR¹R, wobei R, H, C₁-C₆-Alkyl, C₁-C₆-Alkoxy oder gegebenenfalls substituiertes Phenyl bedeutet, oder einen gesättigten oder ungesättigten 3- bis 7-gliedrigen Heterocyclus mit mindestens einem N-Atom und bis zu 3 Heteroatomen, der über das N-Atom mit der Carbonylgruppe verbunden ist und unsubstituiert oder durch Reste aus der Gruppe C₁-C₄-Alkyl, C₁-C₄-Alkoxy oder gegebenenfalls substituiertes Phenyl substituiert ist,
R* eine C₁-C₂-Alkylenkette, die noch mit ein oder zwei C₁-C₄-Alkylresten substituiert sein kann,
R¹ Wasserstoff, C₁-C₁₈-Alkyl, C₃-C₁₂-Cycloalkyl, C₂-C₈-Alkenyl oder C₂-C₈-Alkinyl, wobei die vorstehenden C-haltigen Reste unsubstituiert oder ein- oder mehrfach durch Reste aus der Gruppe enthaltend Halogen, Hydroxy, C₁-C₈-Alkoxy, C₁-C₈-Alkylthio, C₂-C₈-Alkenylthio, C₂-C₈-Alkinylthio, C₂-C₈-Alkenyloxy, C₂-C₈-Alkinyloxy, C₃-C₇-Cycloalkyl, C₃-C₇-Cycloalkoxy, Cyano, Mono- und Di-C₁-C₄-alkyl-amino, C₁-C₈-Alkoxy-carbonyl, C₂-C₈-Alkenyloxy-carbonyl, C₁-C₈-Alkylthio-carbonyl, C₂-C₈-Alkinyloxy-carbonyl, C₁-C₈-Alkyl-carbonyl, C₂-C₈-Alkenyl-carbonyl, C₂-C₈-Alkinyl-carbonyl, C₁-C₈-Alkyl-carbonylamino, C₂-C₈-Alkenyl-carbonylamino, C₂-C₈-Alkinyl-carbonylamino, Aminocarbonyl, C₁-C₈-Alkyl-aminocarbonyl,Di-C₁-C₆-alkyl-aminocarbonyl, C₂-C₆-Alkenyl-aminocarbonyl, C₂-C₆-Alkinyl-aminocarbonyl, C₁-C₈-Alkoxy-carbonylamino, C₁-C₈-Alkyl-aminocarbonylamino, C₁-C₆-Alkylcarbonyloxy, das unsubstituiert oder durch Halogen, NO₂, C₁-C₄-Alkoxy oder gegebenenfalls substituiertes Phenyl substituiert ist, C₂-C₆-Alkenyl-carbonyloxy, C₂-C₆-Alkinyl-carbonyloxy, C₁-C₈-Alkylsulfonyl, Phenyl, Phenyl-C₁-C₆-Alkoxy, Phenyl-C₁-C₆-alkoxy-carbonyl, Phenoxy, Phenoxy-C₁-C₆-alkoxy, Phenoxy- C₁-C₆-alkoxy-carbonyl, Phenylcarbonyloxy, Phenylcarbonylamino, Phenyl-C₁-C₆-alkyl-carbonylamino, wobei die letztgenannten 9 Reste im Phenylring unsubstituiert oder ein- oder mehrfach durch Reste aus der Gruppe Halogen, C₁-C₄-Alkyl, C₁-C₄-Alkoxy, C₁-C₄-Halogenalkyl, C₁-C₄-Halogenalkoxy und Nitro substituiert sind, und Reste der Formeln -SiR'₃, -O-SiR'₃, (R')₃Si-C₁-C₆-alkoxy, -CO-O-NR'₂, -O-N=CR'₂, -N=CR'₂, -O-NR'₂-CH(OR')₂ und -O-(CH₂)ₘ-CH(OR'₂)₂, worin die R' in den genannten Formeln unabhängig voneinander Wasserstoff, C₁-C₄-Alkyl, Phenyl, das unsubstituiert oder ein- oder mehrfach durch Reste aus der Gruppe Halogen, C₁-C₄-Alkyl, C₁-C₄-Alkoxy, C₁-C₄-Halogenalkoxy und Nitro substituiert ist, oder paarweise eine C₂-C₆-Alkylenkette und m = 0 bis 6 bedeuten, und ein Rest der Formel R''O-CHR'''(OR'')-C₁-C₆-alkoxy, worin die Reste R'' unabhängig voneinander C₁-C₄-Alkyl oder zusammen einen C₁-C₆-Alkylenrest und R''' Wasserstoff oder C₁-C₄-Alkyl bedeuten, substituiert sind,
n eine ganze Zahl von 1 bis 5,
W ein divalenter heterocyclischer Rest mit 5 Ringatomen der Formel W1 bis W4, 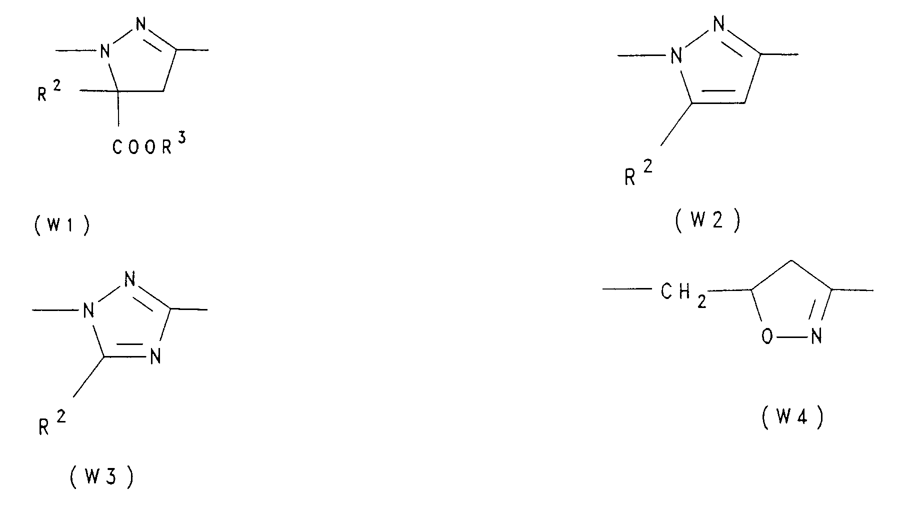 worin
R² Wasserstoff, C₁-C₈-Alkyl, C₁-C₈-Haloalkyl, C₃-C₁₂-Cycloalkyl oder gegebenenfalls substituiertes Phenyl und
R³ Wasserstoff, C₁-C₈-Alkyl, C₁-C₈-Haloalkyl, C₁-C₄-Alkoxy-C₁-C₄-alkyl, C₁-C₆-Hydroxyalkyl, C₃-C₁₂-Cycloalkyl oder Tri-(C₁-C₄-alkyl)-silyl sind,
bedeuten, oder die Salze der genannten Verbindungen enthalten.

2. Mittel nach Anspruch 1, dadurch gekennzeichnet, daß
R¹ Wasserstoff, C₁-C₁₂-Alkyl oder C₃-C₇-Cycloalkyl, C₂-C₈-Alkenyl oder C₂-C₈-Alkinyl, wobei die vorstehenden C-haltigen Reste unsubstituiert oder ein- oder mehrfach durch Halogen oder ein- oder zweifach, vorzugsweise bis zu einfach durch Reste aus der Gruppe Hydroxy, C₁-C₄-Alkoxy, C₁-C₄-Alkylthio, C₂-C₄-Alkenyloxy, C₂-C₆-Alkinyloxy, Mono- und Di-(C₁-C₂-alkyl)-amino, (C₁-C₄-Alkoxy)-carbonyl,C₂-C₄-Alkenyloxy-carbonyl, C₂-C₄-Alkinyloxy-carbonyl, C₁-C₄-Alkyl-carbonyl, C₂-C₄-Alkenyl-carbonyl, C₂-C₄-Alkinyl-carbonyl, C₁-C₄-Alkylsulfonyl, Phenyl, Phenyl-C₁-C₄-alkoxy-carbonyl, Phenoxy, Phenoxy-C₁-C₄-alkoxy, Phenoxy-(C₁-C₄-alkoxy)-carbonyl, wobei die letztgenannten 6 Reste im Phenylring unsubstituiert oder ein- oder mehrfach durch Reste aus der Gruppe Halogen, C₁-C₂-Alkyl, C₁-C₂-Alkoxy, C₁-C₂-Halogenalkyl, C₁-C₂-Halogenalkoxy und Nitro substituiert sind, und Reste der Formeln -SiR'₃, -O-N=CR'₂, -N=CR'₂ und -O-NR'₂, worin die R' in den genannten Formeln unabhängig voneinander Wasserstoff, C₁-C₂-Alkyl, Phenyl, das unsubstituiert oder ein- oder mehrfach durch Reste aus der Gruppe Halogen, C₁-C₂-Alkyl, C₁-C₂-Alkoxy, C₁-C₂-Halogenalkyl, C₁-C₂-Halogenalkoxy und Nitro substituiert ist, oder paarweise eine C₄-C₅-Alkandiylkette bedeuten, substituiert sind,
bedeutet.

3. Mittel nach Anspruch 1 oder 2, dadurch gekennzeichnet, daß in den Verbindungen der Formel B1,
X Wasserstoff, Halogen, Nitro oder C₁-C₄-Halogenalkyl,
n eine Zahl von 1 bis 3,1
Z ein Rest der Formel OR¹,
R¹ Wasserstoff, C₁-C₈-Alkyl, C₃-C₇-Cycloalkyl,
wobei die vorstehenden C-haltigen Reste unsubstituiert sind oder ein- oder mehrfach durch Reste aus der Gruppe Halogen oder ein- oder zweifach, vorzugsweise unsubstituiert oder einfach, durch Reste aus der Gruppe Hydroxy, C₁-C₄-Alkoxy, (C₁-C₄)-Alkoxy)-carbonyl, C₂-C₆-Alkenyloxy-carbonyl, (C₂-C₆-Alkinyloxy)-carbonyl und Reste der Formeln -SiR'₃, -O-N=CR'₂, -N=CR'₂ und -O-NR'₂, worin die Reste R' in den genannten Formeln unabhängig voneinander Wasserstoff oder C₁-C₄-Alkyl oder paarweise eine C₄-C₅-Alkylenkette bedeuten, substituiert sind,
R² Wasserstoff, C₁-C₈-Alkyl, C₁-C₆-Haloalkyl, C₃-C₇-Cycloalkyl oder Phenyl und
R³ Wasserstoff, C₁-C₈-Alkyl, C₁-C₈-Haloalkyl, (C₁-C₄-Alkoxy)-C₁-C₄-alkyl, C₁-C₆-Hydroxyalkyl, C₃-C₇-Cycloalkyl oder Tri-(C₁-C₄-alkyl)-silyl
bedeuten.

4. Mittel nach einem oder mehreren der Ansprüche 1 bis 3, dadurch gekennzeichnet, daß in den Verbindungen der Formeln B2,
X Wasserstoff, Halogen oder C₁-C₄-Halogenalkyl und n eine Zahl von 1 bis 3, vorzugsweise (X)ₙ = 5-Cl,
Z ein Rest der Formel OR¹,
R* CH₂ und
R¹ Wasserstoff, C₁-C₈-Alkyl, C₁-C₈-Haloalkyl, (C₁-C₄-Alkoxy)-C₁-C₄-alkyl oder (C₁-C₄-Alkenyloxy)-C₁-C₄-alkyl, vorzugsweise C₁-C₈-Alkyl,
bedeuten.

5. Mittel nach einem oder mehreren der Ansprüche 1 bis 4, dadurch gekennzeichnet, daß sie ein oder mehrere Herbizide aus der Gruppe enthaltend Phenylsulfonylharnstoffe, Thienylsulfonylharnstoffe, Pyrazolsulfonylharnstoffe, Sulfondiamidderivate, Pyridylsulfonylharnstoffe, Alkoxyphenoxysulfonylharnstoffe, Imidazolinone und Pyrimidin- oder Triazinderivaten in Verbindung mit weiteren Insektiziden und Herbiziden enthalten.

6. Mittel nach einem oder mehreren der Ansprüche 1 bis 5, dadurch gekennzeichnet, daß sie ein oder mehrere Herbizide aus der Gruppe enthaltend Nicosulfuron, DPX-E-9636, Amidosulfuron, Thiameturon-methyl, NC 319, Primisulfuron-methyl, Pyridylsulfonylharnstoffe der Formel A1, 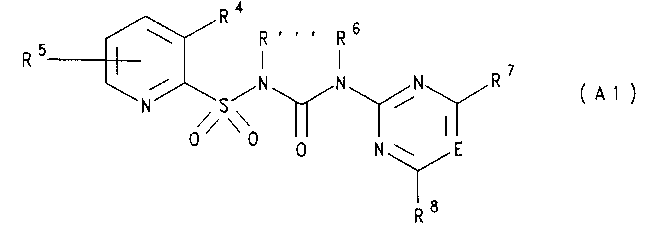 worin
R''' H, Alkalimetall, 1 Äquivalent Erdalkalimetall, Mono-, Di- oder Trialkylammonium,
E CH oder N
R⁴ Halogen oder NR⁹R¹⁰,
R⁵ H, Halogen, Cyano, C₁-C₃-Alkyl, C₁-C₃-Alkoxy, C₁-C₃-Haloalkyl, C₁-C₃-Haloalkoxy, C₁-C₃-Alkylthio, (C₁-C₃-Alkoxy)-C₁-C₃-alkyl,(C₁-C₃-Alkoxy)-carbonyl, Mono- oder Di(C₁-C₃-alkyl)-amino, C₁-C₃-Alkyl-sulfinyl oder -sulfonyl, SO₂-NR^{a}R^{b} oder CO-NR^{a}R^{b},
R⁶ H oder CH₃,
R⁷ Halogen, C₁-C₂-Alkyl, C₁-C₂-Alkoxy, C₁-C₂-Haloalkyl, C₁-C₂-Haloalkoxy oder OCH₂CF₃,
R⁸ C₁-C₂-Alkyl, C₁-C₂-Haloalkoxy oder C₁-C₂-Alkoxy und
R⁹ C₁-C₄-Alkyl und R¹⁰ C₁-C₄-Alkylsulfonyl oder R⁹ und R¹⁰ gemeinsam eine Kette der Formel -(CH₂)₃SO₂- oder -(CH₂)₄SO₂-,
Alkoxyphenoxysulfonylharnstoffe der Formel A2, 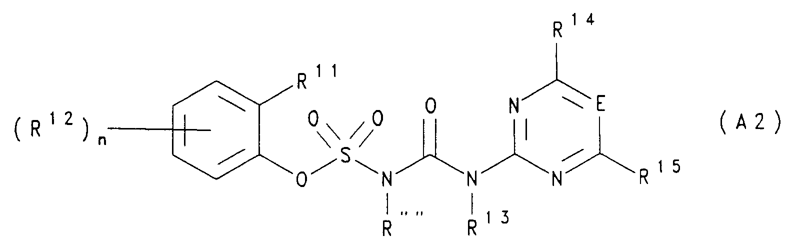 worin
R'''' H, Alkalimetall, 1 Äquivalent Erdalkalimetall, Mono-, Di- oder Trialkylammonium,
E CH oder N,
R¹¹ Ethoxy, Propoxy oder Isopropoxy,
R¹² Wasserstoff, Halogen, NO₂, CF₃, CN, C₁-C₄-Alkyl, C₁-C₄-Alkoxy, C₁-C₄-Alkylthio oder (C₁-C₃-Alkoxy)-carbonyl,
n 1, 2 oder 3,
R¹³ Wasserstoff, C₁-C₄-Alkyl oder C₃-C₄-Alkenyl,
R¹⁴, R¹⁵ unabhängig voneinander Halogen, C₁-C₂-Alkyl, C₁-C₂-Alkoxy, C₁-C₂-Haloalkyl, C₁-C₂-Haloalkoxy oder (C₁-C₂-Alkoxy)-C₁-C₂-alkyl,
bedeuten, oder die Salze der genannten Verbindungen enthalten.

7. Mittel gemäß einem oder mehreren der Ansprüche 1 bis 6, dadurch gekennzeichnet, daß sie mindestens einen Wirkstoff enthalten aus der Reihe der Pyrimidine und Triazine der Formel C, 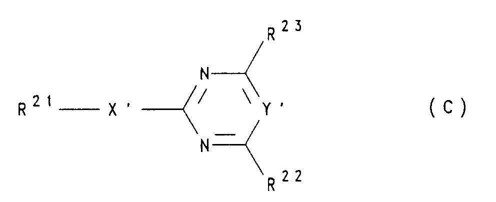 in welcher
X' O, S oder NR²⁴ bedeutet,
Y' N oder CH bedeutet,
R²² und R²³ unabhängig voneinander Wasserstoff, Alkyl Halogenalkyl, Alkoxy Halogenalkoxy, C₁-C₄-Alkylmercapto, C₁-C₄-Alkylamino oder Di-C₁-C₄-alkylamino bedeuten,
R²¹ einen substituierten Aryl- oder Heteroarylrest der Formel 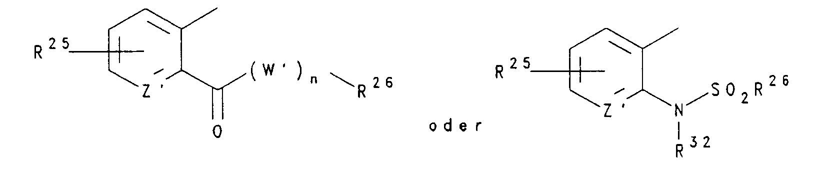 bedeutet,
n' 0 oder 1 ist,
W' -O-, -NR²⁴-, -S-, -ON(R³¹)- oder -O-N=C(R³¹)- bedeutet,
Z' N, N→O oder CR²⁴ bedeutet,
R²⁴ wie R²² oder R²³ definiert ist,
R²⁵ Halogen, Cyano, Nitro, C₁-C₄-Alkyl, C₂-C₄-Alkenyl, C₂-C₄-Alkinyl, C₁-C₄-Alkoxy, Halogenalkyl oder Halogenalkoxy bedeutet,
R²⁶ C₁-C₄-Alkyl, C₂-C₄-Alkenyl, C₂-C₄-Alkinyl, Alkalimetall oder 1 Äquivalent Erdalkalimetall, Alkylammonium, Aryl, CF₃ oder (CHR³³)_{m'}CHR²⁷R²⁸ mit m' = 0 oder 1 bedeutet,
R²⁷ und R³³ unabhängig voneinander Wasserstoff, C₁-C₄-Alkyl oder C₁-C₄-Alkoxy bedeuten,
R²⁸ C₁-C₄-Alkoxycarbonyl, Cyano, Halogen, Acetyl, Pivaloyl, Benzoyl, C₁-C₄-Alkoxy, Aryloxy, Halogenacetoxy, Methansulfonyloxy, Hydroxy, C₁-C₄-Alkylmercapto, C₁-C₄-Alkylsulfonyl, Arylmercapto, Di-C₁-C₄-alkylamino, Pyridyl, Aryl oder CONR²⁹R³⁰ bedeutet,
R²⁹ und R³⁰ unabhängig voneinander Wasserstoff, C₁-C₄-Alkyl, C₂-C₄-Alkenyl, Aryl oder Benzyl bedeuten,
R³¹ Wasserstoff oder C₁-C₄-Alkyl bedeutet oder
R²⁶ und R³¹ zusammen für Methylen, Ethandiyl oder Propandiyl stehen und
Aryl = Phenyl oder Naphthyl bedeutet, das jeweils unsubstituiert oder ein- oder zweifach substituiert ist durch Halogen, C₁-C₄-Alkyl, C₁-C₄-Alkoxy, Phenoxy, Nitro und/oder C₁-C₄-Alkoxycarbonyl,
oder
R¹¹ einen Rest der Formel 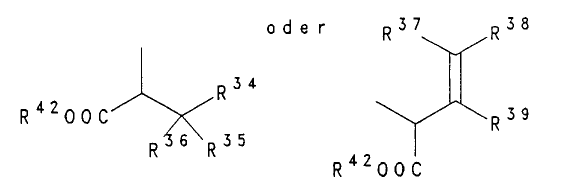 bedeutet,
R³⁴ Wasserstoff, Halogen, Halogen-C₁-C₄-alkyl, C₁-C₄-Alkyl, Cycloalkyl, C₁-C₄-Alkylmercapto-C₁-C₄-alkyl, Hydroxy-C₁-C₄-alkyl, Hydroxy, Cyano, Aryloxyalkyl, Thienyl, Aryl, Dihydronaphthyl oder 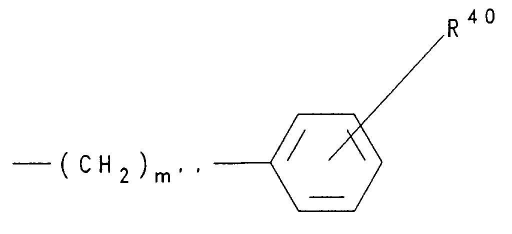 bedeutet, wobei Aryl wie oben definiert ist,
R⁴⁰ Wasserstoff, Halogen, Nitro, C₁-C₄-Alkyl, C₁-C₄-Alkoxy oder S(O)_{p'}R⁴¹ bedeutet,
R⁴¹ Alkyl bedeutet,
p' eine 0, 1 oder 2 ist,
m'' eine 0, 1 oder 2 ist,
R³⁵ und R³⁶ unabhängig voneinander Wasserstoff oder C₁-C₄-Alkyl bedeuten, oder diese zusammen mit dem C-Atom für einen 3-, 4-, 5- oder 6-gliedrigen Cycloalkan-Ring stehen, worin eine Methylengruppe durch Sauerstoff ersetzt sein kann und welcher durch eine oder zwei C₁-C₄-Alkylgruppen substituiert sein kann,
R³⁷ und R³⁸ unabhängig voneinander Wasserstoff oder C₁-C₄-Alkyl bedeuten,
R³⁹ C₁-C₄-Alkyl oder Phenyl bedeutet, oder
R³⁸ und R³⁹ für -(CH₂)ₗ- stehen mit l = 3 oder 4, welches durch eine oder zwei C₁-C₄-Alkylgruppen substituiert sein kann,
R⁴² Wasserstoff, C₁-C₄-Alkyl, C₁-C₄-Alkenyl, C₁-C₄-Alkinyl, Phenyl, C₁-C₄-Alkylidenamino, C₁-C₄-Alkoxycarbonyl-C₁-C₄-alkyl, C₁-C₄-Alkoxy-C₁-C₄-alkyl, Halogen-C₁-C₄-alkyl, Cycloalkyl, nitrosubstituiertes Phenylmercapto-C₁-C₄-alkyl, Halogen oder Benzyl, das durch C₁-C₄-Alkyl oder C₁-C₄-Alkyl oder C₁-C₄-Alkoxy substituiert sein kann, Alkalimetall, 1 Äquivalent Erdalkalimetall, Mono-, Di- oder Trialkylammonium, bedeutet.

8. Mittel nach einem oder mehreren der Ansprüche 1 bis 7, dadurch gekennzeichnet, daß sie zusätzlich Insektizide wie Terbufos, Fonofos, Phorate, Chlorpyrifos oder andere Insektizide
und/oder Herbizide wie Bentazon, Cyanazin, Bromoxynil, Dicamba, Pyridate, 2,4-D, Bromofenoxim oder andere Herbizide verschiedener Wirkstoffklassen enthalten, die selektiv in Mais eingesetzt werden können, wobei Insektizide und Herbizide sowohl gemeinsam mit den ALS-Hemmstoffen oder getrennt von ihnen zeitlich früher oder später angebracht werden können.

9. Mittel nach einem oder mehreren der Ansprüche 1 bis 8, dadurch gekennzeichnet, daß das Gewichtsverhältnis Safener : Herbizid im Bereich von 1 : 10 bis 10 : 1 liegen.

10. Mittel nach einem oder mehreren der Ansprüche 1 bis 9, dadurch gekennzeichnet, daß sie 0,1 bis 99 Gewichtsprozent Wirkstoffe des Typs B) oder des Antidot/Herbizid-Wirkstoffgemischs A) und B) und 1 bis 99,9 Gew.-% eines festen oder flüssigen Zusatzstoffes und 0 bis 25 Gew.-% eines Tensides enthalten.

11. Verfahren zum Schutz von Kulturpflanzen vor phytotoxischen Nebenwirkungen von Herbiziden, dadurch gekennzeichnet, daß eine wirksame Menge einer oder mehrerer Verbindungen (Safener) des in Anspruch 1 definierten Typs B) vor, nach oder gleichzeitig mit dem Herbizid vom Typ A) nach Anspruch 1 auf die Pflanzen, Pflanzensamen oder die Anbaufläche appliziert wird, wobei zusätzlich vorher, nachher oder gleichzeitig ein Insektizid und/oder ein Herbizid gemäß Anspruch 7 oder 8 mit appliziert wird.

12. Verfahren nach Anspruch 11, dadurch gekennzeichnet, daß der Safener vom Typ B) in einer Aufwandmenge von 0,001 bis 2 kg/ha Aktivsubstanz und in einem Gewichtsverhältnis Safener : Herbizid im Bereich von 1 : 10 bis 10 : 1 appliziert wird.

13. Verfahren nach Anspruch 11 oder 12, dadurch gekennzeichnet, daß die Kulturpflanzen Maispflanzen sind.
